(19)

Europäisches
Patentamt

European
Patent Office

Office européen
des brevets

(11) **EP 4 764 743 A1**

(12) **EUROPEAN PATENT APPLICATION**

(43) Date of publication:
**24.06.2026 Bulletin 2026/26**

(21) Application number: **24222052.3**

(22) Date of filing: **20.12.2024**

(51) International Patent Classification (IPC):
**G05B 13/04** *(2006.01)*          **B23K 26/38** *(2014.01)*
**G05B 19/416** *(2006.01)*

(52) Cooperative Patent Classification (CPC):
**G05B 13/048; B23K 26/38; G05B 13/042;**
G05B 19/4163; G05B 2219/36199;
G05B 2219/45041

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bystronic Laser AG
3362 Niederönz (CH)**

(72) Inventor: **The designation of the inventor has not
yet been filed**

(74) Representative: **Schwarz, Claudia
Schwarz + Kollegen
Patentanwälte
Heilmannstraße 19
81479 München (DE)**

(54) **DETERMINATION OF CONTROL COMMANDS FOR A MOTOR OF A LASER CUTTING MACHINE**

(57)     The patent application pertains to a method for determining control commands for driving an electrical drive of a laser processing machine. The method involves receiving specifications from a cutting plan, including an intended trajectory, and providing a machine model that represents the dynamic behavior of the electrical drive. An adapted model predictive control (MPC) algorithm is applied based on the provided machine model and the received specifications to predict the future dynamic behavior of the electrical drive, particularly a predicted trajectory, within a pre-determined prediction horizon. The predicted trajectory is compared with the intended trajectory to determine control commands for the electrical drive. These determined control commands are then provided on a control interface. The machine model is generated in a preparation phase using measurement data from the machine, particularly a position feedback signal. The MPC algorithm is adapted to include constraints on the parameters of the differential equations, particularly on the motor current, and to have a prediction horizon equal to the control horizon. The method allows for precise and repeatable movements of the laser beam along predetermined paths, improving the quality of the processed material.

Fig. 3

## Description

## Technical Field

The present invention relates to a method and system for controlling the movement of a laser processing machine, such as a laser cutting or engraving machine. The technology involves using a model predictive control (MPC) algorithm to predict the future behavior of the machine's electrical drive based on a machine model. The technology can be used to control the machine's movement in the X, Y, and/or Z axes, and can be implemented in a control module within the machine or in a separate computing unit.

## Background of the Invention

Laser processing machines are widely used in various industries for cutting, welding, drilling, and engraving materials. These machines operate by focusing a high-power laser beam ($\geq$ 1kW) onto the material to be processed, causing it to melt, burn, vaporize, or undergo other physical or chemical changes. The laser beam is typically controlled by a computer numerical control (CNC) system, which allows for precise and repeatable movements of the laser beam along predetermined trajectories.

The quality of the processed material can be affected by various factors, including the preciseness and exactness the processing head is moved along the intended trajectory taken into account inertia of the masses involved. Thus, a control for the electrical drives of the laser processing system is key, which addresses these issues.

In prior art systems, a cascaded control was used to control each of the electrical drives. A cascaded control is based on a hierarchy of (in particular nested) control loops, so that the control tasks are divided into hierarchical layers (or loops), where each layer focuses on controlling a specific physical quantity (e.g., current, speed, and position). An inner loop usually is fast and directed to lower-level control loops (e.g., current control) and operate at high frequencies to manage dynamics that respond quickly, whereas outer loops are usually slower, and directed to higher-level control loops (e.g., speed or position control) and handle slower-changing dynamics and use feedback from inner loops.

Thus, a cascaded control typically involves separate control loops for position, velocity, and current/torque.

However, a major disadvantage of a cascaded control architecture is its inability to optimize globally due to its hierarchical and modular structure.

## Presentation of the invention: Object, solution, advantages

An object of the present invention is to provide an improved method and device for determining control commands for driving an electrical drive of a laser processing machine that allows for more precise and efficient control of the laser processing machine and which overcome the drawbacks of state of the art. Another object is to provide an improved quality of the materials processed by such laser processing machine and enhanced performance and longevity of the laser processing machine components.

According to a first aspect the invention relates to a method for determining control commands for driving an electrical drive of a laser processing machine. The method includes receiving specifications from the cutting plan, including an intended trajectory, and providing a machine model that represents the dynamic behavior of the electrical drive. The method further includes applying an adapted model predictive control (MPC) algorithm based on the provided machine model and on the received specifications for predicting the future dynamic behavior of the electrical drive, particularly a predicted trajectory, in a pre-determined prediction horizon. The predicted trajectory is then compared with the intended trajectory for determining control commands for the electrical drive, which are then provided on a control interface.

The material to be processed is supported by a support device. A machine frame is used for e.g., laterally moving the workpiece on the support device. The machine frame can be designed as a frame or have a frame-like structure. The support device can be configured in the form of a shuttle table, for example, having e.g. a grate structure. The shuttle table is mounted - preferably with at least one linear drive per axis - so that it can be moved along a plane parallel to the support plane of the workpiece and can move in and out of the machine frame. The machine frame and in particular its frame part can support a bridge on which a laser processing head is movably mounted. The bridge is movably mounted on the frame part by means of at least one bridge foot and is guided in particular on guide rails running in an X direction on the frame part. Preferably, the laser processing head can be moved in a Y-direction on or along the bridge.

Alternatively or cumulatively to the bridge, a robot arm can be provided on which the laser processing head is arranged and via which it can be moved.

The electrical drive may be a linear drive for one motor, wherein at least one motor is provided in the different space axes for moving the laser processing head (X, Y and Z axes) of the laser processing machine (e.g., used for cutting). The laser processing head may be part of a flatbed laser processing system, like e.g. a laser cutting system. Alternatively, the laser processing machine may be a tube cutting laser machine with respective motors.

The provided machine model represents the dynamic behavior of an electrical drive, in particular of a linear electrical drive. Each electrical drive (also: axis or motor respectively), typically has its own machine model (also in short: model). The model has to be simple enough to guarantee the convergence of the solver in real time, and contains the position, velocity, motor current, a viscous friction parameter and a scaling factor for the translation of the motor current on the acceleration of the axis. The whole laser processing machine will have an impact on the model, but different parts and components can have a much greater or smaller influence on it.

The model is a set of differential equations with the variables stated above, inter alia comprising at least the variables: position, velocity, motor current, a viscous friction parameter and/or a scaling factor. The model may be represented by the following differential equation:

$$\begin{bmatrix} \dot{p} \\ \ddot{p} \end{bmatrix} = \begin{bmatrix} 0 & 1 \\ 0 & f_1(\cdot) \end{bmatrix} \begin{bmatrix} p \\ \dot{p} \end{bmatrix} + \begin{bmatrix} 0 \\ f_2(\cdot) \end{bmatrix} I$$

The formula shown above, describes a dynamic system that is formulated in the state space representation, wherein $\dot{p}$ and $\ddot{p}$ are the first and second time derivatives of the quantity p, i.e. velocity and acceleration and the vector $[\dot{p}, \ddot{p}]^T$ describes the change in the state of the system over time. Being a dynamic equation, the first term may reflect how the current state $(p, \dot{p})$ influences the system dynamics. $f_1(\cdot)$ could be e.g., a nonlinear function (e.g. dependent on p or $\dot{p}$). The second term may reflect the effect of an external force or influence I, scaled by the function $f_2(\cdot)$.

p may refer to the position or state,

$\dot{p}$ is the velocity,

$f_1(\cdot)$ describes a dissipative force and represents a viscous friction

$f_2(\cdot)$ modifies the influence of the external input I.

The machine model is generated in a preparation phase to be provided and used in a control phase for controlling the electrical drives of the laser processing machine.

To identify and analyze the variation of said parameters for model generation, measurement data from the machine are used, in particular comprising a position feedback signal. All necessary variables (e.g., time, position feedback, position command, velocity feedback, current feedback, torque command, and motor data) to determine the unknown model parameters are scoped during the movement of a defined testing geometry which are then used to calculate the parameters by using linear regression. A certain cutting plan of the testing is run across different positions of the processing area to account for the influence of the processing head position in the dynamic behavior of the machine. Thus, in a preparation phase for model generation, a test trajectory is executed and measurement data are captured and used as feedback signal to iteratively optimize each of the models for the several electrical drives, which then may be provided in the control phase.

In contrast to the cascaded control of prior art systems, MPC operates as a single optimization-based controller that accounts for system dynamics holistically over a prediction horizon. Instead of separate loops, MPC integrates the dynamics of position, velocity, and current in a unified model, by incorporating system constraints and using real-time optimization to determine the control actions. MPC inherently predicts system behavior using state variables and does not rely on the same separation of concerns as cascaded loops.

Generally, the main advantage of using an MPC algorithm is the fact that it allows the current timeslot to be optimized while taking future time-slots into account. This is achieved by optimizing a finite time-horizon, but only implementing the first time-slot.

Several MPC algorithms are known in the art. For details of a MPC algorithm for control of electrical drives, it is referred to "Model Predictive Position Control of Electrical Drives on an IPC", F. Karau, M. Leuer, ISBN: 978-9-0758-1539-9 - IEEE: CFP22850-ART.

However, a known MPC algorithm needs to be adapted specifically so that it can be used for determining control commands for a highly dynamically operating laser processing machine.

Adapting the MPC algorithm may comprise:

- Using another model for the linear electrical drive,
- Measures for defining constraints for the parameters of the differential equations, in particular to define constraints for the maximal motor current,
- Having a prediction horizon which equals a control horizon.

The step of adapting may be explained in more detail below. As pointed out above, a laser processing machine has a certain mechanical structure and comprises several linear electrical drives, at least one in one of the three space axes. All these electrical drives have to be controlled to provide a precise processing, like an exact cutting contour. Further, the laser processing head needs to be actuated with high frequencies to allow for a high processing performance. For control of such a laser processing system, it is not possible to use the MPC algorithm (suggested in the F. Karau et al. paper above), which is configured for a simple single rotational motor setup.

Further, it is necessary for laser processing machine control and not possible according to the F. Karau MPC algorithm to implement constraints on the parameters of the differential equations, in particular on the motor current. Instead, in the prediction horizon the optimization according to the F. Karau MPC algorithm assumes that infinite motor current (and hence energy) can be applied. This leads to small delays in exactly following the reference trajectory when the motor is actuated near the maximal current, because an optimization without the maximum motor current will result in input values for the motor higher than the maximum possible motor current. The motor will only be able to provide the maximum, which will result in a lower acceleration than that of the calculated optimal trajectory to minimize the position error. This translates into a bigger position error, since the drive will lag ever more behind the calculated trajectory.

Therefore, the present invention is based on an adapted MPC algorithm. The adaption obviates all the drawbacks, mentioned above, of the F. Karau MPC algorithm. In particular, constraints on the parameters are introduced.

Thus, in the present invention, such constraints in particular on the maximal motor current are implemented.

This leads to the fact that no analytic solution exists, and the solution must be solved numerically. However, a numerical solution is computationally significantly more complex. To be able to run even 3 such solvers (for the different axes, like X1, X2, Y) within targeted e.g. 250 microseconds ($\mu$s) for the position control loop the numerical solution must be solved with high efficiency. Moreover, in contrast to the approach of the paper, where a distinction is made between the prediction and the control horizon, in the present invention both parameters are equal. The F. Karau MPC algorithm has horizon of 20 steps (with a period of 250$\mu$s, resulting in a look-ahead horizon 5ms). In the present invention a horizon of 40 steps is chosen (with a period of 250$\mu$s as well, resulting in a look-ahead horizon of 10ms). Generally, a larger horizon results in a better trajectory tracking and a greater reduction of the position error in tests on actual laser cutting machines. However, a horizon set too large, would require more computational time to find an optimal solution, which might result in no solution being achieved within the set time step. 40 steps, or 10ms, is the compromise resulting from empirical tests.

Generally, a velocity observer may be used to estimate the velocity of the drives in particular for high frequencies, which for laser cutting machines, are very dynamic. Thus, this is very important to avoid instabilities. This velocity observer is, however, not available once the position and velocity control modules are substituted by the MPC. Therefore, an alternative has been built into the MPC. Means may be provided which offer the possibility of implementing current command value filters, which are very important to avoid such instabilities at certain frequencies due, to the mechanical structure of laser cutting machines and their dynamic requirements. These filters are no longer available when the velocity control module is replaced by the MPC. Therefore, according to the invention, the possibility of implementing signal filtering was added to the MPC module.

For the low frequencies the derivative of the measured position is used. Since the high frequencies within this derivative contain a lot of measurement noise, for high frequencies the model of the axis is used which is already implemented for the use within MPC. A Kalman filter is used which also considers the current position measurement for better accuracy. With the use of the crossover filter the addition in the frequency spectrum is realized. For simplicity here a Butterworth squared filter design has been used, which consists in this case of one low-pass and one high-pass filter with the same corner frequency.

Generally, signal filter means a filter can be used on a signal, so that certain values on that signal can be filtered.

Alternatively or cumulatively, the method may include controlling the electrical drive with the determined control commands and measuring a position feedback signal. The determined control commands and the measured position feedback signal, along with the intended trajectory, are then fed to an optimization algorithm for optimizing the machine model by minimizing a cost function.

The optimization algorithm can be implemented in a solver and is preferably executed in real-time, i.e., during productive laser cutting. The intended trajectory is provided by a CNC kernel and serves as an input to the optimization algorithm. The cost function is a mathematical function that the algorithm seeks to minimize. The cost function can be based on pre-definable factors, such as the difference between the predicted and actual positions, the energy consumption of the drive, and other relevant factors.

By continuously updating the machine model based on real-time feedback, the method can dynamically adjust the control commands to account for changes in the system's behavior. This can result in more accurate and efficient control of the electrical drive, leading to improved performance of the laser processing machine.

In addition or alternatively, the method may include considering a tracking error in the cost function, which is determined as the difference between the intended trajectory and the predicted trajectory. The cost function is a mathematical expression that the optimization algorithm seeks to minimize. By including the tracking error in the cost function, the optimization algorithm is guided to find control commands that minimize the deviation of the predicted trajectory from the intended trajectory. This has the technical advantageous effect of penalizing the deviation of predicted outputs from desired reference values, leading to more accurate control of the electrical drive and improved performance of the laser processing machine.

In addition or alternatively, the method may further include considering a control effort in the cost function, which is determined by minimizing energy usage, processing time and/or effort, and/or abrupt direction changes. The control effort is a measure of the amount of energy or effort required to achieve a desired control outcome. By including the control effort in the cost function, the optimization algorithm is guided to find control commands that not only minimize the tracking error but also minimize the control effort. This has the technical advantageous effect of penalizing excessive control effort or rapid changes in control inputs, ensuring smooth operation of the electrical drive and improved performance of the laser processing machine.

In addition or alternatively, the method may include considering pre-defined constraints in the cost function. These constraints can comprise at least a maximum and/or minimum torque constraint, a minimal and/or maximal current value constraint for the electrical drive, speed constraint, acceleration constraint, position error constraint for the electrical drive, constraint for an update time of the control loop, and/or constraint for the processing area within the workpiece to be processed.

For example, the motors may have a maximum torque. If this torque constraint is ignored in the optimization algorithm, this could lead to higher torque inputs for the motors than are physically possible. If the values were simply reduced to the maximum possible torque, this could lead to small delays in exactly following the reference trajectory when the motor is actuated near the maximal current, and therefore bigger position errors. Furthermore, operating at maximum torque for a long period of time can have a negative effect on the drive components and on the stability of the drive system.

There is also a minimum current value when the motor is working. In an embodiment, the constraint for the update time of the control loop may be set to $250\mu s$. The constraint for the processing area reflects the position of the processing head, with position limits in x and y axes.

By including these constraints in the cost function, the optimization algorithm is guided to find control commands that not only minimize the tracking error and control effort, but also respect the physical limitations of the system. This ensures that the control commands are feasible and do not lead to excessive wear or damage to the system components.

In addition or alternatively, the method can be applied for all electrical drives of the laser processing machine in the X-, Y, and/or Z-axis simultaneously and/or independently. This means that the method can be used to determine control commands for each of the electrical drives that control the movement of the laser processing head in the X, Y, and Z directions. The control commands for each drive can be determined simultaneously, meaning that the optimization algorithm considers the interactions between the drives and finds control commands that optimize the overall performance of the system. Alternatively, the control commands for each drive can be determined independently, meaning that the optimization algorithm finds the best control commands for each drive without considering the interactions between the electrical drives. This can simplify the optimization problem and reduce the computational load, but it may not result in the optimal overall performance.

In addition or alternatively, the method can be based on a machine model that is based on a set of parameters representing the dynamic behavior of the laser processing machine, in particular of its electrical drives. This set of parameters can comprise a viscous friction parameter, a scaling factor, penalties for absolute torque, position error, and/or velocity error.

Experiments on different machine platforms (e.g., with linear motion systems for all axes) have shown that viscous friction effects are the most relevant variation to consider.

Further analyses have shown that the friction parameter f1 with respect to the y-position as well as the velocity of the respective axis are relevant for appropriate representation of the dynamic behavior of the electrical drive. In particular, it was found that the variation with respect to the velocity is more significant than the variation with respect to the y-position. Based on these findings, an embodiment of the invention was provided which includes an LTV instead of a LTI model in the optimization problem, which allows the adaptation of the friction based on the predicted axis velocity of the future steps. To be able to identify the friction parameter in this way, the measurement data were grouped into bins based on the absolute axis speed. Within these bins, the friction parameter is identified. This leads to a friction value per velocity bin.

Based on these results the following function was fitted to the results:

$$f_{1_{var}} = f_{1_{static}} + b_0 e^{-b_1|\dot{p}|}$$

Here $b0$ and $b1$ are the parameters to be fitted and will be along with $f1_{static}$ the tuning parameters for the model.

With respect to the scaling factor for the translation of the motor current on the acceleration of the axis: it is part of the machine model to be solved, and it is obtained by using the measured data from the machine.

The solving of the optimization problem by the optimization algorithm results in further parameters, comprising the penalties for absolute torque, position error, and velocity error, which will be used in the tuning of the MPC at the machine. Further factors for tuning are the normalization factor for position, for velocity and for torque. The Kalman filter used for the estimation of velocity also has parameters for its tuning. The friction can be set as static and variable, and each has its own parameters that can be tuned.

Further parameters can be added to account for other errors observed when tuning the MPC for a certain machine type, such as an integrator.

During testing, it has been obtained that for some cases MPC does not show equal performance to the cascaded control for low acceleration limits (1-2 m/s2). The performance was especially worse for long straight lines where there is no movement in x or y direction, hence at least one motor is not moving. Analysis has shown that the problem is based on static friction. With low accelerations and hence lower velocities during deceleration for such cases the axis is more likely to stop with a positional offset due to static friction effects. Since the standard MPC formulation used here does not contain any integral action, this was adapted as an additional feature. The goal of the feature is not to alter the behavior of MPC at high velocities but where a small static offset caused by friction can only be surpassed by integral action. Therefore, one of the tuning parameters is an absolute threshold speed which activates the integral action.

Tests have shown that the tracking performance for long sections in one direction can be increased and the behavior of MPC for other regions is not altered.

Experiments of the inventors and analysis of different machine platforms have shown that viscous friction effects are the most relevant variation to consider. Based on the findings on the friction parameter it should be possible to include a Linear Time Variant, LTV, model instead of a Linear Time Invariant, LTI, model in the optimization problem, which allows the adaptation of the friction based on the predicted axis velocity of the future steps. Generally, LTV allows for dynamic system representation and comes along with the advantage of being able to handle systems where parameters change with time, making them better suited for systems that are inherently time-dependent (e.g., moving laser processing head with time-varying physical properties).

Alternatively or in addition, the method can involve using the adapted Model Predictive Control (MPC) algorithm for both position control and velocity control. Position control refers to the process of controlling the position of the laser processing head along the intended trajectory. Velocity control, on the other hand, refers to the process of controlling the speed at which the laser processing head moves along the intended trajectory. By using the MPC algorithm for both position control and velocity control, the method can ensure that the laser processing head follows the intended trajectory accurately and at the desired speed. This can result in more precise and efficient operation of the laser processing machine.

Alternatively or in addition, the method can involve the Model Predictive Control (MPC) algorithm having access to a reference trajectory in a lookahead time interval. The lookahead time interval refers to a future time period over which the MPC algorithm predicts the behavior of the system. The reference trajectory provides the desired trajectory or path that the laser processing head should follow during this lookahead time interval. By having access to this reference trajectory, the MPC algorithm can make more accurate predictions and determine control commands that will guide the laser processing head along the desired path.

In a preferred embodiment, the prediction horizon is selected to be greater or equal to the lookahead time interval. The prediction horizon refers to the future time period over which the MPC algorithm optimizes the control commands. By selecting the prediction horizon to be greater or equal to the lookahead time interval, the MPC algorithm can ensure that it considers the entire lookahead time interval when optimizing the control commands. This can result in more accurate and efficient control of the laser processing machine.

Alternatively or in addition, the method can include a signal filtering algorithm for filtering control commands in pre-set frequency ranges. A machine with moving components, especially a dynamic machine such as a laser processing machine, can develop instabilities in its drives for certain frequencies. These frequencies are typically the same for a certain machine type and can be determined by simulation. However, often only testing on a physical machine will provide accurate information.

Once these frequencies have been empirically determined, in a preferred embodiment, filters can be set to avoid instabilities at those frequencies, where the control loop is unable to correctly correct the feedback error. This usually happens at higher frequencies. The higher the frequency, the harder it is for a controller to correct the command fast enough, and it might actually contribute to the instability since the correction comes too late, adding to the error instead of subtracting from it.

By including a signal filtering algorithm in the method, the control commands can be filtered to remove or reduce the effects of these problematic frequencies. This can result in more stable operation of the laser processing machine and improved performance.

Alternatively, or in addition, the method can involve applying different control methods for different electrical drives. In particular, for one of the several, in particular four electrical drives (in particular X1, X2, Y and Z), the Model Predictive Control-based method can be applied, and for another one of these axes, a cascaded control method can be applied. The cascaded control method comprises position, velocity, and current controllers, ordered hierarchically.

Although the different controls (MPC-based control and cascaded control) would not be applied or used at the same time in the same axis, they both can be used separately in different axis, such as for instance the MPC in X1, X2 and Y, and the cascaded control in Z.

By applying different control methods to different axes, the method can take advantage of the strengths of each control method and mitigate their weaknesses. For example, the adapted Model Predictive Control method according to the invention can provide more accurate control in axes where the dynamics are more complex or uncertain, while the cascaded control method can provide robust and efficient control in axes where the dynamics are simpler or more predictable. This can result in more effective and efficient control of the laser processing machine.

In general, the method is used for all axes or electrical drives independently.

In a preferred embodiment, a superordinate control algorithm is provided which orchestrates the control methods as explained above method for determining control commands for the different electrical drives individually and thus provides a common and holistic control for all electrical drives of the laser processing machine. The superordinate control algorithm may trigger execution of the control methods for each of the plurality of axes simultaneously but optionally with slightly adapted parameters. In this superordinate control algorithm, the MPC control parameters may be determined individually for each electrical drive, in particular the parameters of the differential equations of the model, like viscous friction parameter, a scaling factor, penalties for absolute torque, position error, and/or velocity error.

Up to now, the invention has been described with respect to the claimed method. Dependent claims, features, advantages or alternative embodiments herein can be assigned to the other claimed objects (e.g. the computer program or the control module, the laser processing system or a computer program product) and vice versa. In other words, the system/apparatus can be improved with features described or claimed in the context of the method and vice versa. In this case, the functional features of the method are embodied by structural units of the apparatus or device or system and vice versa, respectively. Generally, in computer science a software implementation and a corresponding hardware implementation (e.g. as an embedded system) are equivalent. Thus, for example, a method step for "storing" data may be performed with a storage unit and respective instructions to write data into the storage. For the sake of avoiding redundancy, although the device may also be used in the alternative embodiments described with reference to the method, these embodiments are not explicitly described again for the device.

According to a second aspect, the invention relates to a control module configured for determining control commands for driving an electrical drive of a laser processing machine. The control module is configured for executing the method as described above.

The control module may comprise:

A trajectory interface which is configured to receiving specifications from a cutting plan, including an intended trajectory;

A model storage which is configured to store and/or provide a machine model, representing the dynamic behavior of the electrical drive;

A processing unit configured for applying an adapted model predictive control, MPC, algorithm based on the provided machine model and on the received specifications for predicting the future dynamic behavior of the electrical drive, in particular a predicted trajectory, in a pre-determined prediction horizon.

The processing unit may be configured for comparing the predicted trajectory with the intended trajectory for determining control commands for the electrical drive;

The control module may comprise a control interface for providing the determined control commands.

The control module can be implemented as a hardware device, a software program, or a combination of both. It can be integrated into the laser processing machine or can be a separate device that communicates with the machine. The control module can include a processor for executing the method, a memory for storing the machine model and the control commands, and a communication interface for receiving the specifications and providing the control commands.

By using the control module, the laser processing machine can be controlled more accurately and efficiently, leading to improved performance. The control module can also make the machine easier to operate, as it automates the process of determining the control commands.

The control module can be implemented in a motion controller, which is configured to receive signals from a superordinate Programmable Logic Controller (PLC) or Computer Numerical Control (CNC) of the laser processing machine. The motion controller generates electrical signals for an electrical subsystem of the respective electrical drive.

The motion controller is a specialized device that is designed to control the motion of in particular one axis of the laser processing head in the laser processing machine. It receives commands from the PLC or CNC, which specify the desired motion of the laser processing head. The motion controller then uses the control module to determine the control commands that will achieve this desired motion.

The motion controller generates electrical signals based on these control commands. These electrical signals are sent to the electrical subsystem of the respective electrical drive, which controls the movement of the laser processing head. By implementing the control module in the motion controller, the method can be executed close to the hardware, which can result in faster and more accurate control of the laser processing machine.

The invention also encompasses a laser processing system equipped with the control module as described above. The laser processing system may comprise a laser processing machine that can be any machine that uses a laser to process materials, such as a laser cutting machine, a laser welding machine, a laser engraving machine, or a laser marking machine.

The control module is integrated into the laser processing machine and is used to control the operation of the machine's electrical drives. The control module receives specifications from the cutting plan, provides a machine model, applies an adapted model predictive control algorithm, compares the predicted trajectory with the intended trajectory, and provides the determined control commands on a control interface.

By equipping the laser processing system or machine with the control module, the machine can be controlled more accurately and efficiently, leading to improved performance. The control module can also make the machine easier to operate, as it automates the process of determining the control commands.

The invention also encompasses a computer program that can be loaded into a memory unit of a computing unit. The computer program includes program code sections that make the computing unit execute the method for determining control commands for driving an electrical drive of a laser processing machine as described above, when the computer program is executed in the computing unit.

The computer program can be stored on a non-transitory computer-readable medium, such as a hard drive, a solid-state drive, a flash drive, a CD-ROM, or a DVD. The computer program can be loaded into the memory unit of the computing unit, which can be a part of the laser processing machine or a separate device that communicates with the machine.

When the computer program is executed in the computing unit, it controls the operation of the electrical drive of the laser processing machine according to the method. This can result in more accurate and efficient control of the laser processing machine, leading to improved performance. The computer program can also make the machine easier to operate, as it automates the process of determining the control commands.

In another aspect the invention relates to a computer program product with a computer program as described above.

The computer program product may also be provided for download, e.g., via a radio or cellular network, the Internet and/or a host computer. Alternatively, or in addition, the method may be encoded in a Field-Programmable Gate Array (FPGA) and/or an Application-Specific Integrated Circuit (ASIC), or the functionality may be provided for download by means of a hardware description language.

In another aspect the invention relates to a computer-readable medium, on which program code sections of a computer program are stored or saved, said program code sections being loadable into and/or executable in a computing unit to make the computing unit execute the training and/or the detection method as described above, when the program code sections are executed in the computing unit.

In the context of the invention, a "computing/-processing unit" or "processor" may be understood to mean, for example, a machine or an electronic circuit. In particular, a processor may be a central processing unit (CPU), a graphical processing unit (GPU), a microprocessor or a microcontroller, for example, an application-specific integrated circuit or a digital signal processor, possibly in combination with a memory unit for storing program instructions, etc. A processor may also be, for example, an IC (integrated circuit), in particular an FPGA (field programmable gate array) or an ASIC (application-specific integrated circuit), or e.g. a multi-chip module, e.g. a 2.5D or 3D multi-chip module, in which in particular several so-called dies are connected to one another directly or via an interposer, or a DSP (Digital Signal Processor) or a GPU (Graphic Processing Unit). A processor can also be a virtualized processor, a virtual machine or a soft CPU. It can also be, for example, a programmable processor which is equipped with configuration steps for carrying out the said methods according to the invention or is configured with configuration steps in such a way that the programmable processor implements the features according to the invention of the method, the component, the modules, or other aspects and/or partial aspects of the invention.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labelled with the same reference signs in different figures. In general, the figures are not for scale.

It shall be understood that a preferred embodiment of the pre-sent invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

Fig. 1    shows a flow chart of a method for determining control instructions for driving one electrical drive of the laser processing machine according to an embodiment of the present invention;

Fig. 2    depicts an exemplary schematic representation of a prior art cascade control for an electrical drive;

Fig. 3    shows a schematic representation of a control according to an embodiment of the invention;

Fig. 4    shows in a laser cutting machine with a moving laser cutting head in an example embodiment;

Fig. 5    shows a schematic top view of the different axes for the motors driving a moving bridge for support of the cutting head;

Fig. 6　　　depicts the control module in a laser system in a schematic representation;

Fig. 7　　　shows a hierarchical control structure for each of the motors of moving the linear drive in a schematic representation;

Fig. 8　　　showing results of experiments with a digital twin simulation.

DETAILED DESCRIPTION OF THE DRAWINGS AND EMBODIMENTS

Any reference signs in the claims should not be construed as limiting the scope.

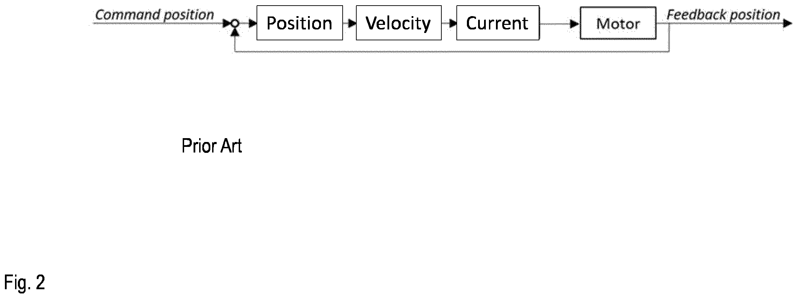

In prior art systems, the motors on laser cutting machines are controlled through a standard cascaded control containing quasi nested control loops, typically comprising a position, velocity and current controller. Feedback signals from the motors, in particular from encoder unit is fed back to the controller for target-actual comparison for trajectory and/or position control. This known approach is shown in Fig. 2.

The cascaded control receives the target position from the CNC/PLC and determines the current that is to be applied to the motors. The control architecture does not allow to directly consider the future evolution of the reference trajectory (e.g. sudden change of direction) and thus may be inaccurate under certain conditions.

Therefore, the invention suggests to use an MPC algorithm.

If implementing a Model predictive control approach, these disadvantages could be overcome. In addition, the following benefits are gained:

- Cost down: make cheaper manufactured machines better using software
- Increased accuracy
- Higher dynamic with weaker structure
- Software product: scalable to other producers
- Better/automated drive tuning.

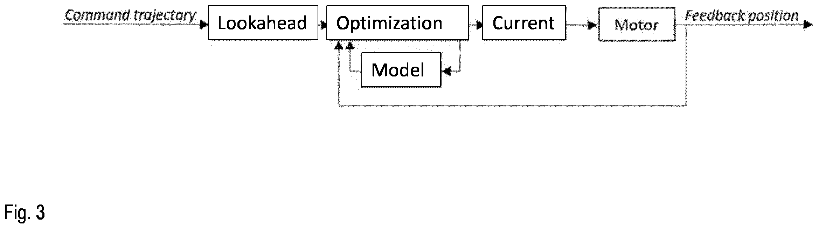

The cascaded control is replaced by a module implementing an adapted MPC algorithm, which is schematically shown in Fig. 3.

A lookahead module is configured for receiving an intended (also: command) trajectory (via user interface, UI). Further, the lookahead module may be configured for receiving (UI based on internally) or providing a prediction horizon for the adapted MPC algorithm. A model for the respective electrical drive, which is to be controlled is provided. This model may be continuously optimized based on feedback signals of the motors (comprising inter alia an actual position signal). Based on the adapted MPC algorithm, control instructions for the electrical drive are determined. This may be accomplished by comparing the actual trajectory with the estimated trajectory, which was output by the (adapted) MPC algorithm.

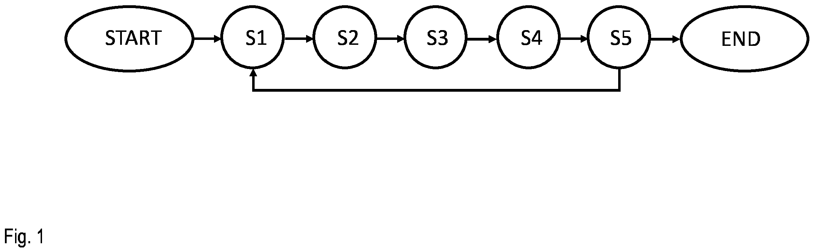

Fig. 1 shows a flow chart with the method steps according to a preferred embodiment of the invention.

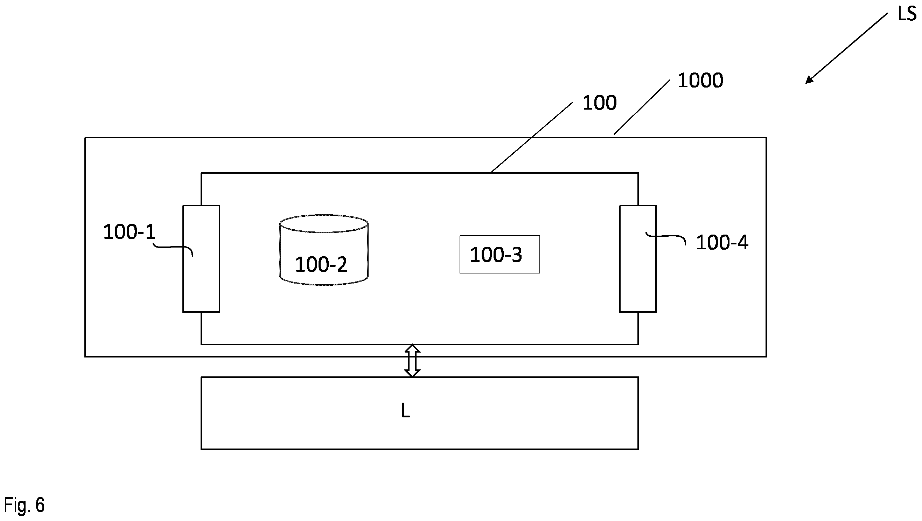

In step S1 specifications of the cutting plan are received via a trajectory interface 100-1 (shown in Fig. 6). The specifications inter alia comprise an intended trajectory.

In step S2, a machine model, representing the dynamic behavior of the electrical drive is provided. Usually, the machine model is generated in a preparation phase, typically after commissioning and set up of the laser processing machine. The model may be generated by an optimization of the parameters of a set of differential equations based on feedback sensor signals (like position signals), wherein the set of differential equations represent the dynamic behavior of the linear drive, as built-in in the laser processing system. The model, once generated may be stored in a model storage 100-2.

In a preferred embodiment, an update of this model may be triggered by e.g. indications provided on a user interface (like "before the next cutting procedure, it is suggested to update the model for linear drive XYZ"). The update trigger may be initiated after pre-defined time intervals and/or if pre-defined conditions are fulfilled (e.g., mechanical or other changes made to the laser processing system). The updated model is stored in the model storage 100-2.

In step S3 an adapted model predictive control, MPC, algorithm is executed. The MPC may be based on the provided machine model and on the received specifications for predicting the future dynamic behavior of the electrical drive, in particular a predicted trajectory, in a pre-determined prediction horizon.

In step S4 the predicted trajectory is compared with the intended trajectory for determining control commands for the electrical drive which are provided on a control interface in step S5.

Providing (S5) the determined control commands on a control interface (100-4) (shown in Fig. 6). After this step, the method may be re-iterated or may end.

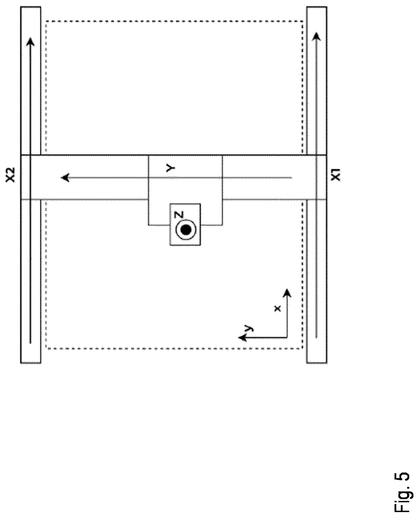

The method may be executed independently for all electrical drives of the laser processing machine. In particular, there are two drives in X1, X2 in X axis direction, and one in Y and one in Z axis direction (Fig. 5).

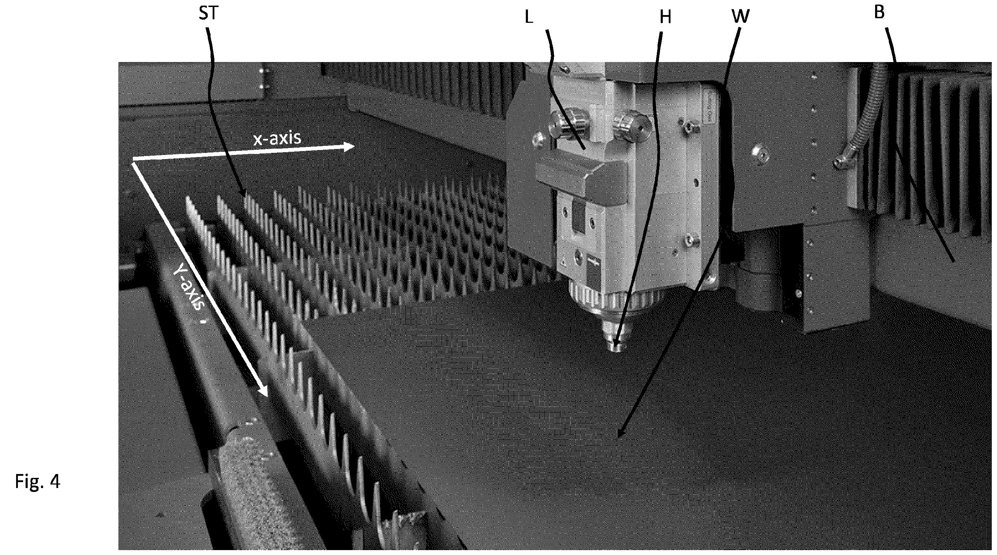

**Fig. 4** shows an example for a laser processing head H of a laser processing machine L, supported on a bridge B, extending in Y axis and moving over a workpiece W. The workpiece W is supported on a shuttle table ST having a grate-like structure.

**Fig. 5** shows a typical machine setup with the respective axes for the linear drives for the motors for a laser processing machine, wherein its laser processing head is mounted on a bridge as explained in Fig. 4. Alternatively, the head may be mounted on a movable robot, which movement control is achieved by executing the control method, as mentioned above.

**Fig. 6** shows a block diagram for a laser processing system LS, which includes inter alia a laser processing machine L and different hierarchically structured control elements, comprising a motion controller 1000 in which a control module 100 is implemented. The control module 100 is configured for executing the method for determining control commands for the electrical drive as mentioned above. The control module 100 comprises interfaces, in particular a trajectory interface 100-1 and a control interface 100-4. Optionally, a user interface may be provided for receiving user input of certain adaption parameters, like the control or prediction horizon, the conditions for model update, model parameters, and/or constraints.

Typically, the adaption parameters may be set before commissioning or when implementing the adapted MPC control for the first time or during an optimization process for a (e.g., new) machine. Once the machine is in productive operation without any (mechanical) modifications, there is no need to change these parameters.

Generally, the method may be executed during or before commissioning of a laser processing machine, in particular a prototype machine (before the first use of the machine). Thus, the settings and control parameters may also be used and applied for other machines of the same series. In case the mounting or wear or machine parts are changed, the parameters of the control method may be adapted again.

The control module 100 further comprises a processing unit 100-3, configured for applying an adapted model predictive control, MPC, algorithm (step S3 of the above method) based on the provided machine model and on the received specifications for predicting the future dynamic behavior of the electrical drive, in particular a predicted trajectory, in a pre-determined prediction horizon. The processing unit 100-3 is configured for comparing the predicted trajectory with the intended trajectory for determining control commands for the electrical drive (step S4 of the method), for providing the same on the control interface 100-4.;

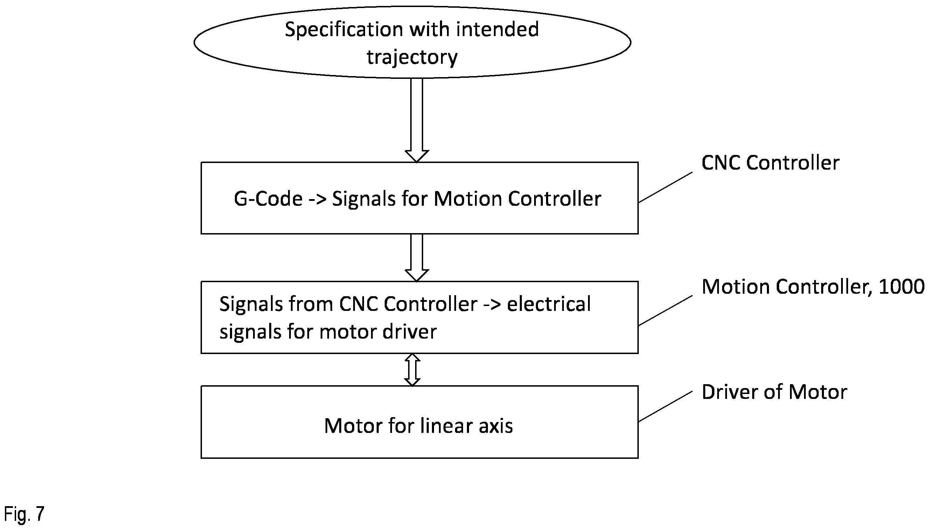

**Fig. 7** shows a typical hierarchical structure of the control elements. A CNC Controller (which may be implemented in a PLC or microprocessor) is provided as superordinate element. The CNC receives the specifications with the intended trajectory and interacts with a motion controller 1000. The motion controller 1000 may be equipped with the control module 100, explained in connection with Fig. 6. The control module is configured to execute the method for determining control commands for the electrical drive as mentioned above.

The whole process from cutting plan generation to machine movement of the laser machine may be controlled as follows.

  1. The process starts with the design of the cutting plan: Desired part geometries are created using CAD/CAM software.

  2. Generation of NC code: Cutting plan is translated to machine command code.

  3. Generation of trajectory: NC code is processed to continuous position commands.

  4. Axis control: The required current for the motors is determined by the axis control based on the command data. First two steps are the position and velocity control that uses the adapted MPC algorithm (according to the invention). The last step (current control) is left unchanged, compared to state of the art.

  5. Machine: The current is fed to the motors and they execute the desired movement.

Using the adapted MPC, the machine can tolerate a larger amount of mid- to high-frequency content in the reference signal without a deterioration of the control error in the time-domain. Specifically, in the example below experiments have demonstrated that

  1) The time required to cut a certain part can be reduced by allowing larger accelerations in the CNC-Kernel (trajectory generation step). The possibility to do that is a state-of-the art feature of CNC motion planners (reduction of 30% in this example).

  2) The resulting reference trajectories (with an acceleration limit of 4m/s^2, and 10m/s^2, respectively) have different characteristics in the time-domain: Larger amplitude in the relevant range for the trajectory with higher acceleration limit.

  3) Digital Twin simulations using cascaded control for both cases show that the deviation between reference signal and simulated position signal of the axis worsens with increasing acceleration when using cascaded control. With adapted MPC, however, the deviation in the time-domain stays at the same level, or even below, the low-acceleration cascaded control case.

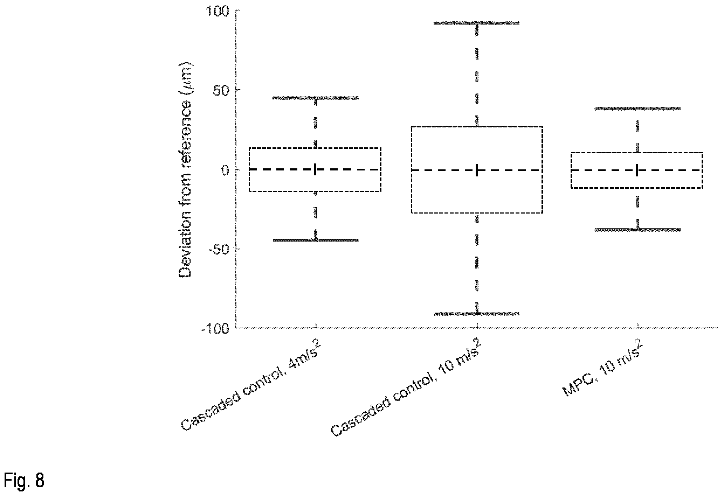

**Fig. 8** shows results of a digital twin simulation. The figure shows the deviation from reference trajectory (position error) of three different settings. Left: Prior art with Cascaded Control with 4 m/s 2 control and dynamics). Middle: Prior art with Cascaded Control with 10 m/s 2 control with 10 m/s 2. On the right, the new adapted MPC control with increased dynamics is shown. The deviation from the reference (dashed line) is represented in the respective rectangles (dotted lines).

An important differentiation is the input signal to the controllers. The cascaded control receives one single commanded position at the time. Whereas in the case of the adapted MPC according to the invention, a command trajectory is fed as follows:
A time window is defined in a receding horizon manner, between the current time and a pre-defined lookahead time. Within this time window, the commanded positions are known ahead of time in the context of a CNC machine, since the part geometry is known in advance.

The trajectory planner (CNC kernel) therefore can assign the commanded positions (intended trajectory) in that lookahead time window. Therefore, at a given time t, the adapted MPC algorithm has access to the reference trajectory in the time window [t,t+TL], whereas the cascaded controller has access only to the reference position at the current time t (TL: Length of lookahead, typically in the range of 10-50 milliseconds). MPC provides a framework that can systematically process that information for feedback control, and thereby take information about the future evolution of the reference position into account for controlling the position of the axis, while classical control methods lack this ability.

As mentioned earlier, the adapted MPC would make it possible to produce less expensive machines. A reduced stiffness of the machine would be consciously accepted, which is however compensated by the adapted MPC.

The advantages of the adapted MPC could be further enhanced by determining the control parameters individually on each machine.

**Claims**

1. Method for determining control commands for driving an electrical drive of a laser processing machine (L), comprising the method steps:

   - Receiving (S1) specifications from a cutting plan, including an intended trajectory;
   - Providing (S2) a machine model, representing the dynamic behavior of the electrical drive;
   - Applying an adapted model predictive control, MPC, algorithm (S3) based on the provided machine model and on the received specifications for predicting the future dynamic behavior of the electrical drive, in particular a predicted trajectory, in a pre-determined prediction horizon;
   - Comparing (S4) the predicted trajectory with the intended trajectory for determining control commands for the electrical drive;
   - Providing (S5) the determined control commands on a control interface (100-4).

2. Method according to claim 1, wherein the method comprises:

   - Controlling the electrical drive with the determined control commands;
   - Measuring a position feedback signal;
   - Feeding the determined (and applied) control commands and the measured position feedback signal and the intended trajectory to an optimization algorithm for optimizing the machine model by minimizing a cost function.

3. Method according to claim 2, wherein the cost function considers a tracking error, determined as difference between the intended trajectory with the predicted trajectory.

4. Method according to any of the preceding claims 2 or 3, wherein the cost function considers a control effort, determined by minimizing energy usage, processing time and/or effort and/ or abrupt direction changes.

5. Method according to any of the claims 2 to 4, wherein the cost function considers pre-defined constraints, comprising a maximum and/or minimum torque constraint, a minimal and/or maximal current value constraint for the motor, speed constraint, acceleration constraint, position error constraint, constraint for an update time of the control loop, constraint for the processing area within the workpiece to be processed.

6. Method according to any of the preceding claims, wherein the method is applied for all electrical drives of the laser processing machine (L) in X-, Y, and/or Z-axes simultaneously and/or independently.

7. Method according to any of the preceding claims, wherein the machine model is based on a set of parameters, representing the dynamic behavior of the laser processing machine, wherein the set of parameters comprise a viscous friction parameter, a scaling factor, penalties for absolute torque, position error, and/or velocity error.

8. Method according to any of the preceding claims, wherein the adapted MPC algorithm is used for position control and for velocity control.

9. Method according to any of the preceding claims, wherein the adapted MPC algorithm has access to a reference trajectory in a lookahead time interval.

10. Method according to any of the preceding claims, wherein the method comprises a signal filtering algorithm for filtering control commands in pre-set frequency ranges.

11. Method according to any of the preceding claims, wherein for different electrical drives, different control methods may be applied, in particular for one of the three axes, the adapted MPC-based method is applied and for another one of the three axes a cascaded control, comprising position, velocity and current controller, ordered hierarchically may be applied.

12. Control module (100) configured for determining control commands for driving an electrical drive of a laser processing machine (L) by executing a method according to any of the preceding method claims, comprising:

- A trajectory interface (100-1), which is configured to receiving specifications from a cutting plan, including an intended trajectory;
- A model storage (100-2), which is configured to store and/or provide a machine model, representing the dynamic behavior of the electrical drive;
- A processing unit (100-3), configured for applying an adapted model predictive control, MPC, algorithm (S3) based on the provided machine model and on the received specifications for predicting the future dynamic behavior of the electrical drive, in particular a predicted trajectory, in a pre-determined prediction horizon;
- wherein the processing unit (100-3) is configured for comparing (S4) the predicted trajectory with the intended trajectory for determining control commands for the electrical drive;
- A control interface (100-4) for providing (S5) the determined control commands.

13. Control module (100) according to claim 12, wherein the control module (100) is implemented in a motion controller (1000), which is configured to receive signals from a superordinate PLC or CNC of the laser processing machine (L) and wherein the motion controller generates electrical signals for an electrical subsystem of the respective electrical drive.

14. Laser processing system (LS) with a laser processing machine (L) and a control module (100) according to claim 12 or 13.

15. Computer program being loadable into a memory unit of a computing unit, including program code sections to make the computing unit execute the method for determining control commands for driving an electrical drive of a laser processing machine according to any of claims 1 to 11, when the computer program is executed in said computing unit.

Fig. 1

Prior Art

Fig. 2

Fig. 3

Fig. 4

Fig. 5

LS

1000

100

100-4

100-3

100-2

100-1

L

Fig. 6

Specification with intended trajectory

CNC Controller

G-Code -> Signals for Motion Controller

Motion Controller, 1000

Signals from CNC Controller -> electrical signals for motor driver

Driver of Motor

Motor for linear axis

Fig. 7

Fig. 8

Europäisches
Patentamt
European
Patent Office
Office européen
des brevets

# EUROPEAN SEARCH REPORT

**Application Number**

EP 24 22 2052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/275621 A1 (KNIAZEV ANDREI [US] ET AL) 27 September 2018 (2018-09-27) <br> * paragraph [0012] * <br> * paragraph [0023] - paragraph [0041] * <br> * paragraph [0104] - paragraph [0107] * <br> * paragraph [0111] - paragraph [0113] * <br> * paragraph [0115] - paragraph [0120] * <br> ----- | 1-15 | INV. <br> G05B13/04 <br> B23K26/38 <br><br> ADD. <br> G05B19/416 |

**TECHNICAL FIELDS
SEARCHED     (IPC)**

G05B
B23K

The present search report has been drawn up for all claims

| Place of search | Date of completion of the search | Examiner |
|---|---|---|
| The Hague | 22 May 2025 | De Porcellinis, S |

EPO FORM 1503 03.82 (P04C01)

## ANNEX TO THE EUROPEAN SEARCH REPORT
## ON EUROPEAN PATENT APPLICATION NO.

EP 24 22 2052

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | | Publication date |
|---|---|---|---|---|
| US 2018275621 A1 | 27-09-2018 | CN | 110462531 A | 15-11-2019 |
| | | EP | 3602209 A1 | 05-02-2020 |
| | | JP | 6727744 B2 | 22-07-2020 |
| | | JP | 2020503614 A | 30-01-2020 |
| | | US | 2018275621 A1 | 27-09-2018 |
| | | WO | 2018173569 A1 | 27-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. KARAU** ; **M. LEUER**. *Model Predictive Position Control of Electrical Drives on an IPC*